# FASCICULE DE BREVET EUROPEEN

(11) **EP 4 353 587 B1**
(45) Date de publication et mention de la délivrance du brevet: **02.07.2025**
(21) Numéro de dépôt: 23201381.3
(22) Date de dépôt: 03.10.2023
(51) Int. Cl.: B64C 23/06

(54) **PROCÉDÉ DE MONTAGE D'UN GÉNÉRATEUR DE TOURBILLONS SUR UNE PAROI AÉRODYNAMIQUE COURBE D'UN AÉRONEF ET AÉRONEF COMPRENANT AU MOINS UN GÉNÉRATEUR DE TOURBILLONS AINSI MONTÉ**
VERFAHREN ZUR MONTAGE EINES WIRBELGENERATORS AN EINER GEKRÜMMTEN AERODYNAMISCHEN WAND EINES FLUGZEUGS UND FLUGZEUG MIT MINDESTENS EINEM DARAUF MONTIERTEN WIRBELGENERATOR
METHOD FOR MOUNTING A VORTEX GENERATOR ON A CURVED AERODYNAMIC WALL OF AN AIRCRAFT AND AIRCRAFT COMPRISING AT LEAST ONE VORTEX GENERATOR THUS MOUNTED

(30) Priorité: 12.10.2022 FR 2210449
(43) Date de publication de la demande: 17.04.2024
(73) Titulaire: AIRBUS OPERATIONS (S.A.S.), 31060 Toulouse (FR)
(72) Inventeur: FERREIRA, Julien, TOULOUSE (FR); WEILL, Rémy, TOULOUSE (FR)
(74) Mandataire: Fantin, Laurent

(56) Documents cités:
- EP-A1- 3 575 208
- EP-A1- 3 575 209
- FR-A1- 3 099 460

## Description

La présente demande se rapporte à un procédé de montage d'un générateur de tourbillons sur une paroi aérodynamique courbe d'un aéronef ainsi qu'à un aéronef comprenant au moins un générateur de tourbillons ainsi monté.

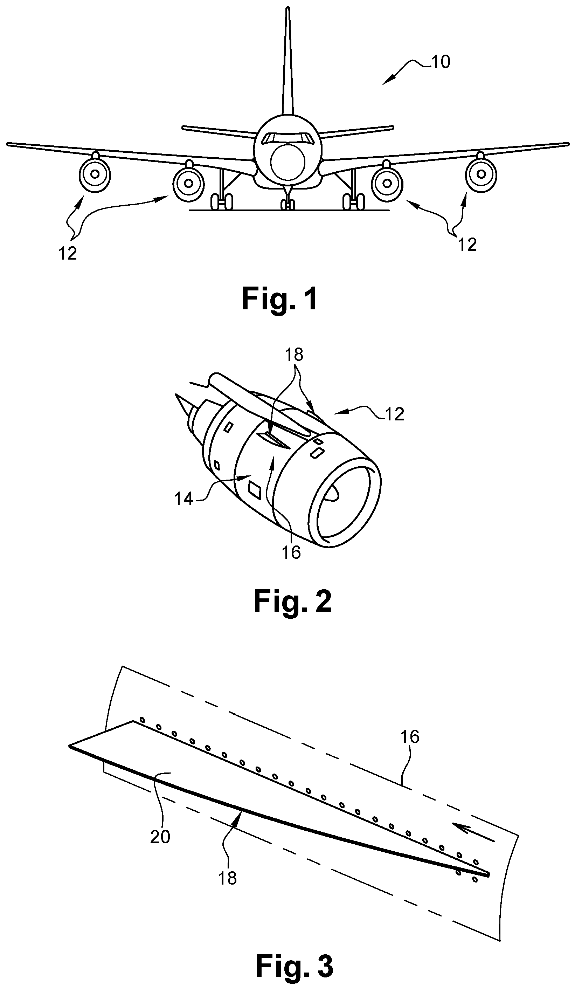

Comme illustré sur les figures 1 et 2, un aéronef 10 comprend plusieurs ensembles de propulsion 12 qui présentent chacun une nacelle 14 entourant une motorisation. La nacelle 14 comprend au moins une paroi aérodynamique 16, comme un capot par exemple, équipée d'au moins un générateur de tourbillons 18 également appelé aileron ou aigrette (ou strake en anglais).

Les générateurs de tourbillons 18, positionnés de part et d'autre du mât au niveau du capot de la nacelle, permettent d'obtenir un gain en matière aérodynamique, notamment en retardant le décollement du flux d'air sur l'extrados de l'aile et en augmentant la portance durant les phases d'atterrissage.

Selon un premier mode de réalisation, un générateur de tourbillons présente une section transversale en T et comprend une partie active (correspondant à la jambe du T) ainsi qu'une embase (correspondant à la tête du T) plaquée contre la surface externe de la paroi aérodynamique. Deux rangées d'éléments de liaison, positionnées de part et d'autre de la paroi active, sont prévues pour relier l'embase du générateur de tourbillons et la paroi aérodynamique.

Selon ce mode de réalisation, la paroi aérodynamique ayant un profil courbe, l'embase du générateur de tourbillons doit également être courbe pour épouser la forme de la surface externe de la paroi aérodynamique, ce qui complexifie le procédé de fabrication du générateur de tourbillons. Selon un autre inconvénient, l'embase du générateur de tourbillons présente un chant, en saillie par rapport à la surface externe de la paroi aérodynamique, qui perturbe le flux d'air et génère une traînée parasite.

Pour remédier à cet inconvénient, le document FR3081830 décrit un générateur de tourbillons tel qu'illustré sur les figures 3 et 4. Selon ce deuxième mode de réalisation, le générateur de tourbillons 18 comprend :
- Une partie active 20, en saillie par rapport à la surface externe 16.1 de la paroi aérodynamique 16, qui présente un prolongement 20.1 en saillie par rapport à la surface interne 16.2 de la paroi aérodynamique 16,
- une première cornière 22 qui présente une première aile 22.1, plaquée contre une première face du prolongement 20.1, et une deuxième aile 22.2 plaquée contre la surface interne 16.2 de la paroi aérodynamique 16,
- une deuxième cornière 24 qui présente une première aile 24.1, plaquée contre une deuxième face du prolongement 20.1, et une deuxième aile 24.2 plaquée contre la surface interne 16.2 de la paroi aérodynamique 16.

Pour relier le générateur de tourbillons 18 et la paroi aérodynamique 16, l'aéronef comprend :
- une première série d'éléments de liaison 26 reliant les premières ailes 22.1, 24.1 des première et deuxième cornières 22, 24 et le prolongement 20,1,
- une deuxième série d'éléments de liaison 28 reliant la deuxième aile 22.2 de la première cornière 22 et la paroi aérodynamique 16,
- une troisième série d'éléments de liaison 28' reliant la deuxième aile 24.2 de la deuxième cornière 24 et la paroi aérodynamique 16.

Selon un mode opératoire, un procédé de montage d'un tel générateur de tourbillons 18 comprend une étape de réalisation d'une découpe traversant la paroi aérodynamique 16 pour loger une partie de la partie active 20, une étape d'insertion, depuis la face externe 16.1 de la paroi aérodynamique 16, du prolongement 20.1 de la partie active 20 dans la découpe réalisée précédemment, une étape d'assemblage des première et deuxième cornières 22, 24 en les reliant au prolongement 20.1 grâce à la première série d'éléments de liaison 26 qui traverse les premières ailes 22.1, 24.1 des première et deuxième cornières 22, 24 ainsi que le prolongement 20.1, puis enfin une étape d'assemblage des deuxièmes ailes 22.2, 24.2 des première et deuxième cornières 22, 24 en les plaquant contre la surface interne 16.2 de la paroi aérodynamique 16 et en les reliant à la paroi aérodynamique grâce aux deuxième et troisième séries d'éléments de liaison 28, 28' qui traversent les deuxièmes ailes 22.2, 24.2 et la paroi aérodynamique 16. Les éléments de liaison 28, 28' des deuxième et troisième séries présentent des têtes fraisées logées dans des logements chanfreinés prévus au niveau de la surface externe 16.1 de la paroi aérodynamique 16.

La paroi aérodynamique 16 étant courbe, les première et deuxième ailes de chacune des première et deuxième cornières 22, 24 ne sont pas perpendiculaires entre elles. La deuxième aile 22.2, 24.2 de chacune des première et deuxième cornières 22, 24 est courbe pour pouvoir être plaquée contre la surface interne 16.2 de la paroi aérodynamique 16.

Ce deuxième mode de réalisation n'est pas satisfaisant car les procédés de fabrication et de montage du générateur de tourbillons 18 sont relativement complexes en raison de la courbure des deuxièmes ailes 22.2, 22.4 des première et deuxième cornières 22, 24 du générateur de tourbillons 18 et du nombre de pièces à assembler.

Selon son résumé, le document EP3575208 A1 divulgue un aéronef comprenant au moins une paroi aérodynamique présentant des surfaces externe et interne et au moins un générateur de tourbillons qui comprend:- au moins une paroi active en saillie par rapport à la surface externe de la paroi aérodynamique,- un système de liaison reliant le générateur de tourbillons à la paroi aérodynamique qui comporte:- au moins un support en partie plaqué contre la surface interne de la paroi aérodynamique,- au moins un premier élément de fixation reliant le support et la paroi active,-au moins un deuxième élément de fixation reliant le support et la paroi aérodynamique et présentant une tête affleurante au niveau de la surface externe de la paroi aérodynamique.

Selon son résumé, le document FR3099460 A1 divulgue un assemblage d'une paroi aérodynamique d'un aéronef et d'un générateur de tourbillons comprenant au moins une plaque intercalaire comportant une première face présentant une géométrie identique à celle de la face externe de la paroi aérodynamique et une deuxième face présentant une géométrie identique à celle de la face de contact de l'embase du générateur de tourbillons.

Selon son résumé, le document EP3575209 A1 divulgue un aéronef comprenant une paroi aérodynamique présentant des surfaces externe et interne et au moins un générateur de tourbillons qui comprend: - au moins une paroi active en saillie par rapport à la surface externe de la paroi aérodynamique, - un système de liaison reliant le générateur de tourbillons à la paroi aérodynamique qui comporte: - au moins un support présentant une base plaquée contre la surface interne de la paroi aérodynamique et une tête qui traverse la paroi aérodynamique et coopère avec la paroi active, - au moins un premier élément de fixation reliant la base du support et la paroi aérodynamique, - au moins un deuxième élément de fixation reliant la tête du support et la paroi active.

La présente invention vise à remédier à tout ou partie des inconvénients de l'art antérieur. A cet effet, l'invention a pour objet un procédé de montage d'un générateur de tourbillons sur une paroi aérodynamique d'un aéronef présentant des surfaces externe et interne, au moins la surface interne étant courbe, le générateur de tourbillons comportant une partie active et une embase, ladite embase comprenant au moins une aile sensiblement perpendiculaire à la partie active, ladite aile présentant une surface supérieure sensiblement plate et orientée vers la paroi aérodynamique en fonctionnement, le procédé de montage comportant une étape de réalisation d'une découpe traversant la paroi aérodynamique et configurée pour loger une partie de la partie active du générateur de tourbillons, une étape de fabrication du générateur de tourbillons d'un seul tenant ainsi qu'une étape d'assemblage du générateur de tourbillons et de la paroi aérodynamique avec des éléments de liaison. Selon l'invention, le procédé de montage comprend, avant l'étape d'assemblage, une étape de mise en place d'au moins une cale intercalée entre l'embase et la paroi aérodynamique, ladite cale comportant une première face, orientée vers la paroi aérodynamique en fonctionnement, qui est conformée comme la surface interne de la paroi aérodynamique ainsi qu'une deuxième face, orientée vers l'embase en fonctionnement, qui est conformée comme la surface supérieure de l'aile de l'embase.

En raison de la présence de la cale, il est possible de fabriquer le générateur de tourbillons indépendamment du profil courbe de la paroi aérodynamique, ce qui permet de simplifier le procédé de fabrication du générateur de tourbillons. La cale permet d'adapter le profil de l'embase du générateur de tourbillons à la courbure de la paroi aérodynamique et d'obtenir une liaison plus stable entre le générateur de tourbillons et la paroi aérodynamique.

Selon une autre caractéristique, l'étape de mise en place d'au moins une cale consiste à positionner la cale contre la face supérieure de chaque aile de l'embase avant une étape d'introduction de la partie active du générateur de tourbillons dans la découpe depuis la surface interne de la paroi aérodynamique.

Selon une autre caractéristique, le procédé de montage comprend une étape de pose d'un mastic dans la découpe autour de la partie active du générateur de tourbillons.

Selon une autre caractéristique, l'embase comprend des première et deuxième ailes s'étendant de part et d'autre de la partie active. En complément, la cale comprend un orifice traversant configuré pour loger partiellement la partie active.

Selon une autre caractéristique, la cale recouvre entièrement les faces supérieures des première et deuxième ailes de l'embase.

L'invention a également pour objet un aéronef comprenant au moins un générateur de tourbillons monté à partir du procédé de montage selon l'une des caractéristiques précédentes, l'aéronef comprenant une paroi aérodynamique présentant des surfaces externe et interne, au moins la surface interne étant courbe, le générateur de tourbillons comportant une partie active et une embase, ladite embase comprenant au moins une aile sensiblement perpendiculaire à ladite partie active, ladite aile présentant une surface supérieure, orientée vers la paroi aérodynamique en fonctionnement, sensiblement plate, l'aéronef comprenant des éléments de liaison reliant le générateur de tourbillons et la paroi aérodynamique.

Selon l'invention, l'aéronef comprend au moins une cale intercalée entre l'embase et la paroi aérodynamique, ladite cale comportant une première face, orientée vers la paroi aérodynamique, qui est conformée comme la surface interne de la paroi aérodynamique ainsi qu'une deuxième face, orientée vers l'embase, qui est conformée comme la surface supérieure de l'aile de l'embase.

Selon une autre caractéristique, l'embase comprend des première et deuxième ailes s'étendant de part et d'autre de la partie active. En complément, la cale comprend un orifice traversant configuré pour loger en partie la partie active.

Selon une autre caractéristique, la cale recouvre entièrement les faces supérieures des première et deuxième ailes de l'embase.

D'autres caractéristiques et avantages ressortiront de la description de l'invention qui va suivre, description donnée à titre d'exemple uniquement, en regard des dessins annexés parmi lesquels :
- La figure 1 est une vue de face d'un aéronef,
- La figure 2 est une vue en perspective d'un ensemble de propulsion comportant des générateurs de tourbillons,
- La figure 3 est une vue en perspective d'une paroi aérodynamique équipée d'un générateur de tourbillons illustrant un mode de réalisation de l'art antérieur,
- La figure 4 est une coupe transversale de la paroi aérodynamique et d'une partie du générateur de tourbillons visibles sur la figure 3,
- La figure 5 est une coupe transversale d'une paroi aérodynamique et d'un générateur de tourbillons illustrant un mode de réalisation de l'invention,
- La figure 6 est une coupe selon la ligne VI-VI de la figure 5 de la paroi aérodynamique et du générateur de tourbillons visibles sur la figure 5, et
- La figure 7 est une vue en perspective d'une paroi aérodynamique et d'un générateur de tourbillons à l'état démonté sur la partie (A) et à l'état monté sur la partie (B).

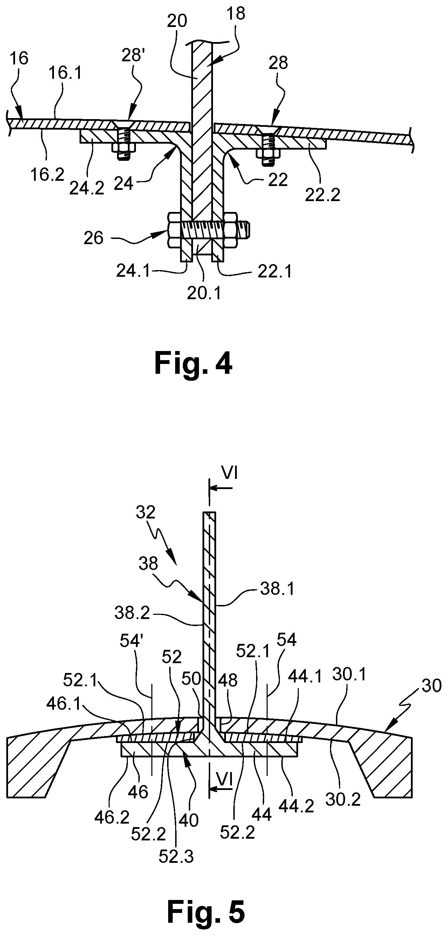

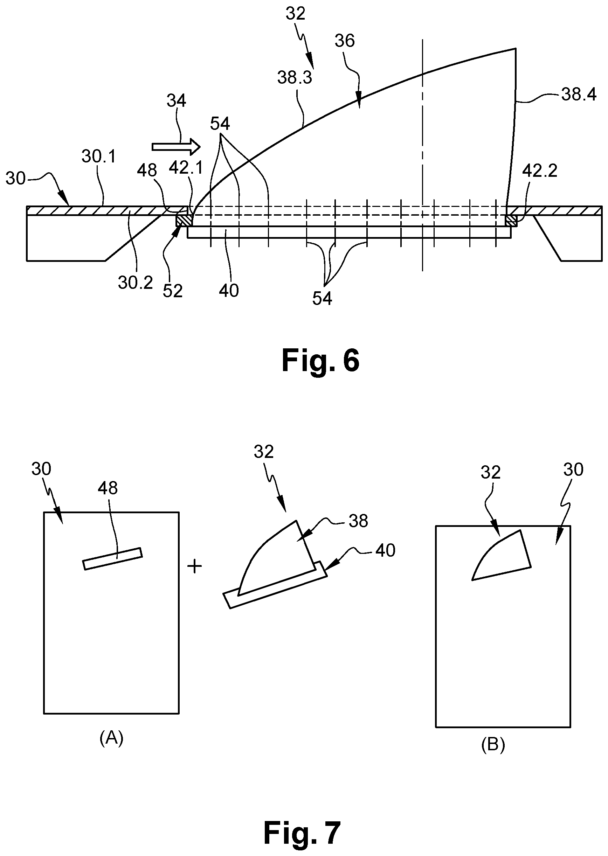

Selon un mode de réalisation visible sur les figures 5 et 6, un aéronef comprend au moins une paroi aérodynamique 30 et au moins un générateur de tourbillons 32. Selon une application, la paroi aérodynamique 30 correspond à la paroi extérieure d'une nacelle d'un ensemble de propulsion d'un aéronef. Bien entendu, l'invention n'est pas limitée à cette application.

La paroi aérodynamique 30 comprend une surface externe 30.1 contre laquelle s'écoule un flux d'air 34, notamment lorsque l'aéronef est en vol, ainsi qu'une surface interne 30.2 opposée à la surface externe 30.1. Selon une configuration, la paroi aérodynamique 30 comprend une épaisseur (distance séparant les surfaces externe et interne 30.1, 30.2) sensiblement constante au moins dans la zone au niveau de laquelle est prévu le générateur de tourbillons 32.

La paroi aérodynamique 30 comprend au moins une courbure dans un plan dit plan transversal.

Pour la suite de la description, les notions amont et aval font référence au sens d'écoulement du flux d'air 34, ce dernier s'écoulant de l'amont vers l'aval.

Le générateur de tourbillons 32 présente une section transversale en T et comprend une partie active 38 (correspondant à la jambe du T) ainsi qu'une embase 40 (correspondant à la tête du T). Le générateur de tourbillons 32 est réalisé d'un seul tenant et s'étend entre des extrémités amont et aval 42.1, 42.2. Le fait que le générateur de tourbillons 32 soit réalisé d'un seul tenant permet de réduire le nombre de pièces à assembler lors de son montage.

La partie active 38 présente deux faces latérales 38.1, 38.2 sensiblement parallèles entre elles, au moins un bord d'attaque 38.3 qui s'étend depuis l'extrémité amont 42.1 et s'écarte de l'embase 40 en s'éloignant de l'extrémité amont 42.1, ainsi qu'un bord de fuite 38.4 positionné au droit de l'extrémité aval 42.2 qui s'étend selon une direction approximativement perpendiculaire à l'embase 40. Le bord d'attaque 38.3 peut être directement relié au bord de fuite 38.4 ou relié à ce dernier par l'intermédiaire d'un bord intermédiaire courbe. Selon les configurations, le bord d'attaque 38.3 peut être rectiligne ou courbe.

La partie active 38 présente une épaisseur (distance séparant les faces latérales 38.1, 38.2) sensiblement constante.

Bien entendu, l'invention n'est pas limitée à cette configuration pour la partie active 38. Quelle que soit la configuration, la partie active 38 présente une épaisseur donnée ainsi qu'une longueur (correspondant à la plus grande distance entre les bords d'attaque et de fuite 38.3, 38.4) donnée.

L'embase 40 présente des première et deuxième ailes 44, 46 plates, qui s'étendent de part et d'autre de la partie active 38, positionnées dans un même plan et sensiblement perpendiculaires à la partie active 38.

Chacune des première et deuxième ailes 44, 46 comprend une face supérieure 44.1, 46.1 plate, orientée vers la surface interne 30.2 de la paroi aérodynamique 30 en fonctionnement, ainsi qu'une face inférieure 44.2, 46.2 opposée à la face supérieure 44.1, 46.1. Généralement, cette face inférieure 44.2, 46.2 est également sensiblement plate.

Le fait de prévoir des première et deuxième ailes 44, 46 perpendiculaires à la partie active 38 avec des surfaces supérieures 44.1, 46.1 plates permet de simplifier le procédé de fabrication du générateur de tourbillons 32.

Selon une configuration, chacune des première et deuxième ailes 44, 46 est sensiblement rectangulaire.

Pour permettre la mise en place du générateur de tourbillons 32, la paroi aérodynamique comprend une découpe 48, la traversant et débouchant au niveau des surfaces externe et interne 30.1, 30.2, qui présente une longueur sensiblement égale ou très légèrement supérieure à la longueur de la partie active 38 ainsi qu'une largeur sensiblement égale ou très légèrement supérieure à l'épaisseur de la partie active 38.

En fonctionnement, la partie active 38 est logée en partie dans la découpe 48 de la paroi aérodynamique 30 et l'embase 40 est plaquée contre la surface interne 30.2 de la paroi aérodynamique 30. Cet agencement permet de limiter l'apparition d'une traînée parasite.

Une fois le générateur de tourbillons 32 installé, un jeu peut subsister entre la partie active 38 et la paroi aérodynamique 30. Dans ce cas, l'aéronef comprend au moins un mastic 50 pour combler ce jeu afin de limiter l'apparition d'une traînée parasite. Ce mastic 50 comprend une surface affleurant la surface externe 30.1 de la paroi aérodynamique 30.

Selon une particularité de l'invention, l'aéronef comprend au moins une cale 52 intercalée entre la paroi aérodynamique 30 et l'embase 40 du générateur de tourbillons 32.

Cette cale 52 présente une première face 52.1, orientée vers la paroi aérodynamique 30 en fonctionnement, qui présente une courbure adaptée à celle de la surface interne 30.2 de la paroi aérodynamique 30 pour épouser ladite surface interne 30.2, ainsi qu'une deuxième face 52.2, orientée vers l'embase 40 en fonctionnement, qui est sensiblement plate et conformée comme la face supérieure 44.1, 46.1 des première et deuxième ailes 44, 46 de l'embase 40.

Ainsi, lorsque le générateur de tourbillons 32 est relié à la paroi aérodynamique 30, on obtient des contacts surfaciques optimaux entre d'une part la cale 52 et la paroi aérodynamique 30ainsi que, d'autre part, entre la cale 52 et l'embase 40 du générateur de tourbillons 32.

La cale 52 comprend un orifice traversant 52.3 configuré pour loger partiellement la partie active 38.

Selon un agencement, la cale 52 recouvre entièrement les faces supérieures 44.1, 46.1 des première et deuxième ailes 44, 46 de l'embase 40.

L'aéronef peut comprendre une unique cale ou plusieurs cales. Bien entendu, un faible nombre de cales permet de réduire le nombre de pièces à assembler.

Selon un premier mode de réalisation, la cale 52 est réalisée par usinage ou par fabrication additive selon la géométrie souhaitée concernant les première et deuxième faces 52.1, 52.2. Elle est rigide lorsqu'elle est mise en place.

Selon un deuxième mode de réalisation, la cale 52 est réalisée à partir d'un produit plus ou moins pâteux, intercalé entre la paroi aérodynamique 30 et l'embase 40 du générateur de tourbillons 32, qui épouse leurs formes. Ainsi, une fois durci, la cale présente une première face 52.1 conformée comme la surface interne 30.2 de la paroi aérodynamique 30 et une deuxième face 52.2 conformée comme les faces supérieures 44.1, 46.1 des première et deuxième ailes 44, 46 de l'embase 40 du générateur de tourbillons 32.

L'aéronef comprend des éléments de liaison 54 configurés pour relier le générateur de tourbillons 32 et la paroi aérodynamique 30.

Chacun de ces éléments de liaison 54 comprend une tige configurée pour traverser la première ou deuxième aile 44, 46 de l'embase 40 du générateur de tourbillons 32, la cale 52 et la paroi aérodynamique 30 et comprend une première tête configurée pour prendre appui contre la paroi aérodynamique ainsi qu'une deuxième tête configurée pour prendre appui contre l'embase.

Selon un mode de réalisation, la première tête affleure la surface externe 30.1 de la paroi aérodynamique 30. Selon une configuration, la première tête est une tête fraisée. En complément, la paroi aérodynamique 30 comprend, pour chaque élément de liaison 54, un logement chanfreiné configuré pour loger la première tête.

Selon un agencement, l'aéronef comprend deux séries d'éléments de liaison 54, 54' positionnés de part et d'autre de la partie active 38, une première série d'éléments de liaison 54 reliant la première aile 44 de l'embase 40 du générateur de tourbillons 32 et la paroi aérodynamique 30 ainsi qu'une deuxième série d'éléments de liaison 54' reliant la deuxième aile 46 de l'embase 40 du générateur de tourbillons 32 et la paroi aérodynamique 30.

Pour chacun des éléments de liaison 54, 54', l'embase 40 et la cale 52 comprennent chacune un orifice traversant.

Comme illustré sur la figure 7, un procédé de montage d'un générateur de tourbillons 32 comprend une étape de réalisation d'une découpe 48, traversant la paroi aérodynamique 30, configurée pour loger la partie active 38 d'un générateur de tourbillons 32 et une étape de fabrication d'un générateur de tourbillons 32 qui présente une section en T et comprend une partie active 38 et une embase 40 réalisées d'un seul tenant. Ce générateur de tourbillons 32 présente un profil indépendant de la courbure de la paroi aérodynamique 30.

Le procédé de montage comprend une étape de mise en place d'au moins une cale 52 autour de la partie active 38, en contact avec les faces supérieures 44.1, 46.1 des première et deuxième ailes 44, 46 de l'embase 40. La cale 52 comporte une première face 52.1, orientée vers la paroi aérodynamique 30 en fonctionnement, qui est conformée comme la surface interne 30.2 de la paroi aérodynamique 30 ainsi qu'une deuxième face 52.2, orientée vers l'embase 40, qui est conformée comme la face supérieure 44.1, 46.1 des première et deuxième ailes 44, 46 de l'embase 40.

Le procédé de montage comprend une étape d'insertion de la partie active 38 du générateur de tourbillons 32 dans la découpe 48 de la paroi aérodynamique 30, depuis la surface interne 30.2 de la paroi aérodynamique 30, jusqu'à ce que la cale 52 soit en contact avec la surface interne 30.2 de la paroi aérodynamique 30.

En variante, le procédé de montage comprend une étape de mise en place de la cale 52 contre la surface interne 30.2 de la paroi aérodynamique 30 et ensuite une étape d'insertion de la partie active 38 du générateur de tourbillons 32 dans l'orifice traversant 52.3 de la cale 52 puis dans la découpe 48.

Quel que soit le mode opératoire, le procédé de montage comprend une étape de mise en place d'au moins une cale 52 entre la paroi aérodynamique 30 et l'embase 40 du générateur de tourbillons 32.

Le procédé de montage comprend une étape d'assemblage du générateur de tourbillons 32 et de la paroi aérodynamique 30 en les reliant avec des éléments de liaison 54, 54'.

Enfin, si nécessaire, le procédé de montage comprend une étape de pose d'un mastic 50 dans la découpe 48 autour de la partie active 38 du générateur de tourbillons 32 pour limiter les perturbations aérodynamiques parasites.

Selon l'invention, l'embase 40 du générateur de tourbillons 32 n'est plus en saillie par rapport à la surface externe 30.1 de la paroi aérodynamique 30. Par conséquent, elle ne génère pas de perturbations aérodynamiques parasites.

Le fait que le générateur de tourbillons 32 soit fabriqué sans tenir compte de la courbure de la paroi aérodynamique 30 permet d'en simplifier sa fabrication.

Le fait de réaliser la partie active 38 et l'embase 40 d'un seul tenant permet de réduire le nombre de pièces à assembler.

Enfin, la présence de la cale 52 permet d'adapter le profil de l'embase 40 du générateur de tourbillons 32 à la courbure de la paroi aérodynamique 30 et d'obtenir une liaison plus stable entre le générateur de tourbillons 32 et la paroi aérodynamique 30.

Bien entendu, l'invention n'est pas limitée au mode de réalisation précédemment décrit. Ainsi, l'embase 40 peut ne comprendre qu'une seule aile 44.

## Revendications

1. Procédé de montage d'un générateur de tourbillons (32) sur une paroi aérodynamique (30) d'un aéronef présentant des surfaces externe et interne (30.1, 30.2), au moins la surface interne (30.2) étant courbe, le générateur de tourbillons (32) comportant une partie active (38) et une embase (40), ladite embase (40) comprenant au moins une aile (44, 46) sensiblement perpendiculaire à la partie active (38), ladite aile (44, 46) présentant une surface supérieure (44.1, 46.1), orientée vers la paroi aérodynamique (30) en fonctionnement, sensiblement plate, le procédé de montage comportant une étape de réalisation d'une découpe (48) traversant la paroi aérodynamique (30) et configurée pour loger une partie de la partie active (38) du générateur de tourbillons (32), une étape de fabrication du générateur de tourbillons (32) d'un seul tenant ainsi qu'une étape d'assemblage du générateur de tourbillons (32) et de la paroi aérodynamique (30) avec des éléments de liaison (54, 54') ; **caractérisé en ce que** le procédé de montage comprend, avant l'étape d'assemblage, une étape de mise en place d'au moins une cale (52) intercalée entre l'embase (40) et la paroi aérodynamique (30), ladite cale (52) comportant une première face (52.1), orientée vers la paroi aérodynamique (30) en fonctionnement, qui est conformée comme la surface interne (30.2) de la paroi aérodynamique ainsi qu'une deuxième face (52.2), orientée vers l'embase (40) en fonctionnement, qui est conformée comme la surface supérieure (44.1, 46.1) de l'aile (44, 46) de l'embase (40).

2. Procédé de montage selon la revendication précédente, **caractérisé en ce que** l'étape de mise en place d'au moins une cale (52) consiste à positionner la cale (52) contre la face supérieure (44.1, 46.1) de chaque aile (44, 46) de l'embase (40) avant une étape d'introduction de la partie active (38) du générateur de tourbillons (32) dans la découpe (48) depuis la surface interne (30.2) de la paroi aérodynamique (30).

3. Procédé de montage selon l'une des revendications précédentes, **caractérisé en ce que** le procédé de montage comprend une étape de pose d'un mastic (50) dans la découpe (48) autour de la partie active (38) du générateur de tourbillons (32).

4. Procédé de montage selon l'une des revendications précédentes, **caractérisé en ce que** l'embase (40) comprend des première et deuxième ailes (44, 46) s'étendant de part et d'autre de la partie active (38) et **en ce que** la cale (52) comprend un orifice traversant (52.3) configuré pour loger partiellement la partie active (38).

5. Procédé de montage selon la revendication précédente, **caractérisé en ce que** la cale (52) recouvre entièrement les faces supérieures (44.1, 46.1) des première et deuxième ailes (44, 46) de l'embase (40).

6. Aéronef comprenant au moins un générateur de tourbillons (32) monté à partir du procédé de montage selon l'une des revendications précédentes, l'aéronef comprenant une paroi aérodynamique (30) présentant des surfaces externe et interne (30.1, 30.2), au moins la surface interne (30.2) étant courbe, le générateur de tourbillons (32) comportant une partie active (38) et une embase (40), ladite embase (40) comprenant au moins une aile (44, 46) sensiblement perpendiculaire à ladite partie active (38), ladite aile (44, 46) présentant une surface supérieure (44.1, 46.1), orientée vers la paroi aérodynamique (30) en fonctionnement, sensiblement plate, l'aéronef comprenant des éléments de liaison (54, 54') reliant le générateur de tourbillons (32) et la paroi aérodynamique (30) ; **caractérisé en ce que** l'aéronef comprend au moins une cale (52) intercalée entre l'embase (40) et la paroi aérodynamique (30), ladite cale (52) comportant une première face (52.1), orientée vers la paroi aérodynamique (30), qui est conformée comme la surface interne (30.2) de la paroi aérodynamique (30) ainsi qu'une deuxième face (52.2), orientée vers l'embase (40), qui est conformée comme la surface supérieure (44.1, 46.1) de l'aile (44, 46) de l'embase (40).

7. Aéronef selon la revendication précédente, **caractérisé en ce que** l'embase (40) comprend des première et deuxième ailes (44, 46) s'étendant de part et d'autre de la partie active (38) et **en ce que** la cale (52) comprend un orifice traversant (52.3) configuré pour loger partiellement la partie active (38).

8. Aéronef selon la revendication précédente, **caractérisé en ce que** la cale (52) recouvre entièrement les faces supérieures (44.1, 46.1) des première et deuxième ailes (44, 46) de l'embase (40).

## Patentansprüche

1. Verfahren zur Montage eines Wirbelgenerators (32) an einer aerodynamischen Wand (30) eines Luftfahrzeugs mit Außen- und Innenflächen (30.1, 30.2), wobei zumindest die Innenfläche (30.2) gekrümmt ist, wobei der Wirbelgenerator (32) einen aktiven Teil (38) und eine Basis (40) aufweist, wobei die Basis (40) wenigstens einen Flügel (44, 46) aufweist, der im Wesentlichen im rechten Winkel zu dem aktiven Teil (38) ausgerichtet ist, wobei der Flügel (44, 46) eine obere Fläche (44.1, 46.1) aufweist, die im Betrieb der aerodynamischen Wand (30) zugewandt ist und im Wesentlichen flach ist, wobei das Montageverfahren einen Schritt zur Herstellung eines Ausschnitts (48) aufweist, der durch die aerodynamische Wand (30) verläuft und so eingerichtet ist, dass er einen Teil des aktiven Teils (38) des Wirbelgenerators (32) aufnimmt, einen Schritt zur Herstellung des Wirbelgenerators (32) aus einem Stück sowie einen Schritt zur Montage des Wirbelgenerators (32) und der aerodynamischen Wand (30) mit Verbindungselementen (54, 54') aufweist, **dadurch gekennzeichnet, dass** das Montageverfahren vor dem Montageschritt einen Schritt des Anbringens von wenigstens einem Keil (52) aufweist, der zwischen der Grundplatte (40) und der aerodynamischen Wand (30) eingefügt ist, wobei der Keil (52) eine erste Fläche (52.1) aufweist, die im Betrieb der aerodynamischen Wand (30) zugewandt ist und wie die Innenfläche (30.2) der aerodynamischen Wand geformt ist, sowie eine zweite Seite (52.2) aufweist, die im Betrieb der Grundplatte (40) zugewandt ist und wie die obere Fläche (44.1, 46.1) des Flügels (44, 46) der Grundplatte (40) geformt ist.

2. Montageverfahren nach dem vorhergehenden Anspruch, **dadurch gekennzeichnet, dass** der Schritt des Anbringens von wenigstens einem Keil (52) darin besteht, den Keil (52) gegen die Oberseite (44.1, 46.1) jedes Flügels (44, 46) der Basis (40) vor einem Schritt des Einführens des aktiven Teils (38) des Wirbelgenerators (32) in den Ausschnitt (48) von der Innenfläche (30.2) der aerodynamischen Wand (30) aus zu positionieren.

3. Montageverfahren nach einem der vorhergehenden Ansprüche, **dadurch gekennzeichnet, dass** das Montageverfahren einen Schritt des Einbringens eines Dichtstoffs (50) in den Ausschnitt (48) um den aktiven Teil (38) des Wirbelgenerators (32) herum umfasst.

4. Montageverfahren nach einem der vorhergehenden Ansprüche, **dadurch gekennzeichnet, dass** die Basis (40) einen ersten und einen zweiten Flügel (44, 46) aufweist, die sich auf beiden Seiten des aktiven Teils (38) erstrecken, und dass der Keil (52) eine Durchgangsöffnung (52.3) aufweist, die so eingerichtet ist, dass sie den aktiven Teil (38) teilweise aufnimmt.

5. Montageverfahren nach dem vorhergehenden Anspruch, **dadurch gekennzeichnet, dass** der Keil (52) die Oberseiten (44.1, 46.1) des ersten und zweiten Flügels (44, 46) der Basis (40) vollständig bedeckt.

6. Luftfahrzeug mit wenigstens einem Wirbelgenerator (32), der nach dem Montageverfahren gemäß einem der vorhergehenden Ansprüche montiert ist, wobei das Luftfahrzeug eine aerodynamische Wand (30) mit einer Außen- und einer Innenfläche (30.1, 30.2) aufweist, wobei wenigstens die Innenfläche (30.2) gekrümmt ist, wobei der Wirbelgenerator (32) einen aktiven Teil (38) und eine Basis (40) aufweist, wobei die Basis (40) wenigstens einen Flügel (44, 46) aufweist, der im Wesentlichen im rechten Winkel zu dem aktiven Teil (38) ausgerichtet ist, wobei der Flügel (44, 46) eine obere Fläche (44.1, 46.1) aufweist, die im Betrieb der aerodynamischen Wand (30) zugewandt ist und im Wesentlichen flach ist, wobei das Luftfahrzeug Verbindungselemente (54, 54') aufweist, die den Wirbelgenerator (32) und die aerodynamische Wand (30) verbinden, **dadurch gekennzeichnet, dass** das Luftfahrzeug wenigstens einen Keil (52) aufweist, der zwischen der Basis (40) und der aerodynamischen Wand (30) angeordnet ist, wobei der Keil (52) eine erste Fläche (52.1) aufweist, die der aerodynamischen Wand (30) zugewandt ist und die wie die Innenfläche (30.2) der aerodynamischen Wand (30) geformt ist, sowie eine zweite Seite (52.2) aufweist, die der Grundplatte (40) zugewandt ist und die wie die obere Fläche (44.1, 46.1) des Flügels (44, 46) der Grundplatte (40) geformt ist.

7. Luftfahrzeug nach dem vorhergehenden Anspruch, **dadurch gekennzeichnet, dass** die Basis (40) einen ersten und einen zweiten Flügel (44, 46) aufweist, die sich auf beiden Seiten des aktiven Teils (38) erstrecken, und dass der Keil (52) eine Durchgangsöffnung (52.3) aufweist, die so eingerichtet ist, dass sie den aktiven Teil (38) teilweise aufnimmt.

8. Luftfahrzeug nach dem vorhergehenden Anspruch, **dadurch gekennzeichnet, dass** der Keil (52) die oberen Flächen (44.1, 46.1) des ersten und zweiten Flügels (44, 46) der Grundplatte (40) vollständig bedeckt.

## Claims

1. Method for mounting a vortex generator (32) on an aerodynamic panel (30) of an aircraft having outer and inner surfaces (30.1, 30.2), at least the inner surface (30.2) being curved, the vortex generator (32) comprising an active portion (38) and a base (40), said base (40) comprising at least one arm (44, 46) substantially perpendicular to the active portion (38), said arm (44, 46) having a substantially flat upper face (44.1, 46.1) oriented towards the aerodynamic panel (30) during operation, the mounting method comprising a step of making a cut-out (48) passing through the aerodynamic panel (30) and configured to receive a portion of the active portion (38) of the vortex generator (32), a step of manufacturing the vortex generator (32) in one piece and a step of assembling the vortex generator (32) and the aerodynamic panel (30) with connecting elements (54, 54'), **characterized in that** the mounting method comprises, before the assembly step, a step of installing at least one shim (52) interposed between the base (40) and the aerodynamic panel (30), said shim (52) comprising a first face (52.1), oriented towards the aerodynamic panel (30) during operation, that is shaped like the inner surface (30.2) of the aerodynamic panel, and a second face (52.2), oriented towards the base (40) during operation, that is shaped like the upper face (44.1, 46.1) of the arm (44, 46) of the base (40).

2. Mounting method as claimed in the preceding claim, wherein the step of installing at least one shim (52) consists of positioning the shim (52) against the upper face (44.1, 46.1) of each arm (44, 46) of the base (40) before a step of inserting the active portion (38) of the vortex generator (32) into the cut-out (48) from the inner surface (30.2) of the aerodynamic panel (30).

3. Mounting method as claimed in one of the preceding claims, wherein the mounting method comprises a step of applying a bead of sealant (50) in the cut-out (48) around the active portion (38) of the vortex generator (32).

4. Mounting method as claimed in one of the preceding claims, wherein the base (40) comprises first and second arms (44, 46) extending on either side of the active portion (38) and in that the shim (52) comprises a through-hole (52.3) configured to partially receive the active portion (38).

5. Mounting method as claimed in the preceding claim, wherein the shim (52) fully covers the upper faces (44.1, 46.1) of the first and second arms (44, 46) of the base (40).

6. Aircraft comprising at least one vortex generator (32) mounted using the mounting method as claimed in one of the preceding claims, the aircraft comprising an aerodynamic panel (30) having outer and inner surfaces (30.1, 30.2), at least the inner surface (30.2) being curved, the vortex generator (32) comprising an active portion (38) and a base (40), said base (40) comprising at least one arm (44, 46) substantially perpendicular to the active portion (38), said arm (44, 46) having a substantially flat upper face (44.1, 46.1) oriented towards the aerodynamic panel (30) during operation, the aircraft comprising connecting elements (54, 54') connecting the vortex generator (32) and the aerodynamic panel (30), **characterized in that** the aircraft comprises at least one shim (52) interposed between the base (40) and the aerodynamic panel (30), said shim (52) comprising a first face (52.1), oriented towards the aerodynamic panel (30), that is shaped like the inner surface (30.2) of the aerodynamic panel (30), and a second face (52.2), oriented towards the base (40), that is shaped like the upper face (44.1, 46.1) of the arm (44, 46) of the base (40).

7. Aircraft as claimed in the preceding claim, wherein the base (40) comprises first and second arms (44, 46) extending on either side of the active portion (38) and in that the shim (52) comprises a through-hole (52.3) configured to partially receive the active portion (38).

8. Aircraft as claimed in the preceding claim, wherein the shim (52) fully covers the upper faces (44.1, 46.1) of the first and second arms (44, 46) of the base (40).
